# EUROPEAN PATENT SPECIFICATION

(11) **EP 3 371 363 B1**
(45) Date of publication and mention of the grant of the patent: **17.07.2019**
(21) Application number: 16785454.6
(22) Date of filing: 21.10.2016
(51) Int. Cl.: D04H 3/16, B62D 25/16, B60R 13/08, B60R 19/03

(54) **WHEEL ARCH LINER FOR A VEHICLE**
RADLAUFAUSKLEIDUNG FÜR EIN FAHRZEUG
REVÊTEMENT DE PASSAGE DE ROUE POUR UN VÉHICULE

(30) Priority: 04.11.2015 EP 15193084
(43) Date of publication of application: 12.09.2018
(73) Proprietor: Autoneum Management AG, 8406 Winterthur (CH)
(72) Inventor: KÖNIGBAUER, Stefan, Northville, Michigan 48167 (US); MENOZZI, Edoardo, 5432 Neuenhof (CH)
(86) International application number: PCT/EP2016/075351
(87) International publication number: WO 2017/076663

(56) References cited:
- EP-A1- 2 364 881
- WO-A2-2012/085707
- US-A1- 2010 078 927
- US-A1- 2015 125 504

## Description

### Technical Field

The present invention is directed to wheel arch liners for a vehicle, and a method for producing such parts.

### Background Art

It is known in the art to line the outer wheel arch of vehicles with a trim part or cladding, also known as outer wheel arch liner, fender liner or wheel outer liner. These wheel arch liners can be mounted on the front and/or rear wheel arch opposite the wheel to protect the body of the car. Eventually splash shields can be integrated in the design of the part. Outer liners are used at the exterior of the car.

These wheel arch liners may reduce the noise transmission into the vehicle interior of noises generated during driving of the vehicle. These noises are mainly caused by the wheel rotating on the road surface, as well as noise from coming from water and stones thrown by the tires at the wheel house. However the wheel arch liner also serves as protection against particles highly accelerated against the wheel arch during driving, due to the rotating wheel, such as sand and gravel, and for protection against water and mud.

Known outer wheel arch liners may be made of for instance solid plastic, in the form of injection moulded parts, which are heavy in weight. These parts may be combined with a fibrous material layer for increased acoustic performance. However the fibrous material tends to absorb water and other liquids and increases its weight during use. This is a huge disadvantage.

It is known in the art to compensate this effect by using a coating of sprayed-on surfactant, or to use additional water-repellent layers, like for instance un-perforated or micro perforated foils or hydrophobic covering fabrics, for instance made of Teflon fibers. However this is adding complexity to the production process and cost to the final product. Overall these spray-on coatings have the problem that they might not impregnate the whole depth of the fabric. Furthermore the coatings or films might come off or worn off during the use of the part on the vehicle. In particular collisions with gravel and road dirt might damage the surface and impair the function of the coating or film.

US 2010/0078927 A1 reveals a fender liner including a breathable base material layer produced by forming a fiber assembly into a shape along the wheel house and a protective layer made of waterproof material.

Wheel house liners are formed to follow the shape of the wheel housing of vehicles. Outer wheel arch liners are therefore formed as 3-dimensional structural parts. The part may not deform during use as this might cause problems. However the absorption of water or other liquids may cause the part changing form and or stiffness. The possible loss of structural stiffness during use might be compensated with the number of mounting points to mount the wheel arch liner to the vehicle, in most of the cases these mounting points are arranged around the rim of the outer wheel arch liners and not necessary across the middle of the structure. An increase of mounting points including means for mounting will add to the overall cost and weight of the wheel arch liner and will increase complexity of production and mounting.

The structural stiffness for wheel arch liners can be impaired by the harsh conditions these parts meet during their lifetime of use on the vehicle. They can be subjected to stone chipping, dirt, hot, cold and/or wet weather conditions and might also collide with obstacles underneath the car during use. In addition they might be subjected to high pressure water hosing during cleaning procedures.

High potential for liquid absorption and retention, in particular of dirty road water, oils and other liquids, is a more general problem with outer wheel arch liners containing or consisting of porous layers and/ or air permeable layers. This could increase the weight of the outer wheel arch liner and/or might cause failure of the mounting and/or deflection of the material during use of the outer wheel arch liner on the vehicle.

There is a need for alternative materials and lightweight solutions for wheel arch liners with reduced liquid and water absorption properties, still having good noise absorption, which are at least able to perform comparable to the current products on the market fulfilling the requirements of the car makers for these products such as good fatigue properties and good recyclability and that overcome the problems of the current materials, in particular the drawback of liquid absorption and retention.

### Summary of invention

The object is achieved by the wheel arch liners or cladding for a vehicle according to claim 1, comprising at least a fibrous layer comprising of thermoplastic bicomponent filaments, consisting of a first polymer forming the core of the bicomponent filament and a second polymer forming the sheath of the bicomponent filament, whereby the sheath of the bicomponent filament comprises at least one repellent additive of Fluorinated or per-fluorinated short chain molecules with a chain length in the range of C4-C14 and whereby the fibrous layer is consolidated by heating thereby melting the sheath polymer forming binding points between the filaments and redistributing the repellent additive forming a liquid repellent consolidated fibrous layer.

Surprisingly, adding the repellent additive, according to the invention and as claimed, in the sheath of the bicomponent filament of a fibrous layer converted to a wheel arch liner during a hot moulding process, increases the liquid repellent properties of the wheel arch liner even after moulding of the part, without substantially impairing the stiffness or other necessary properties of the part formed.

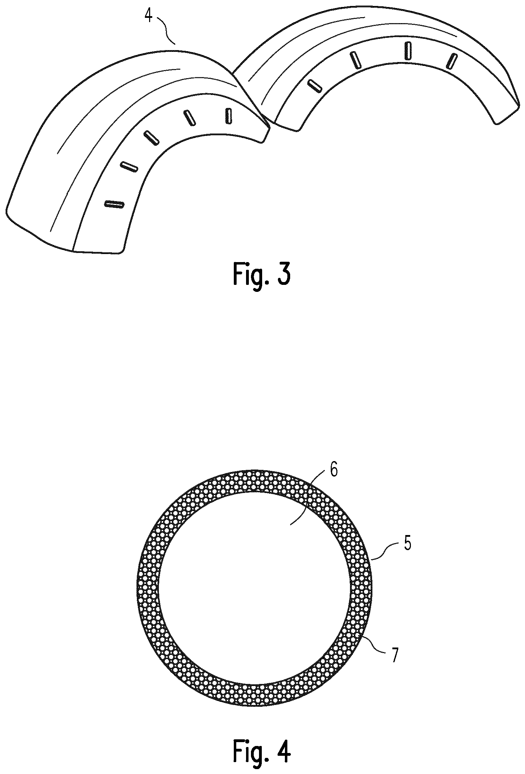

Bicomponent filaments or cut filaments, also known as staple fibers, are made from two polymers distributed over the entire length of the filaments. By "co-extruding" two polymers into one single filament, the different properties of both polymers are combined. A bicomponent filament (5) with a, preferably concentric, sheath/core configuration (see figure 4) consists of a sheath (7) made from polymers with a low melting point around a core (6) made of polymers with a high melting point.

Preferably the filaments are made with a process known as melt spun process, whereby the polymers are co-extruded, the melt is pushed under pressure through a spin plate placed in a spin beam, the so formed bicomponent filaments are quenched using cold air, drawn and laid down on a running belt forming a fibrous mat or web. Alternatively the filaments are taken off in a bundle or tow and cut into staple fibers. These staple fibers can be later, in a separate process, further formed in a mat or web by known techniques, like carding or air laying. Both the mat of the filament process or of the cut filament process can be used to make the wheel house liner according to the invention.

The repellent additive is added to the sheath polymer before or during extrusion and the sheath polymer and core polymer are simultaneously extruded through a spin plate to form the bicomponent filaments. The filaments can be cut to staple fibers.

The sheath of the bicomponent filaments forming the fibrous layer comprises of at least one of a repellent additives belonging to the chemical group of fluorinated or per-fluorinated short chain molecules with a chain length in the range of C4-C14.

Additional chemicals to facilitate the mixing and stability of repellent additive and sheath polymer can be used like compatibilizers additives that when added to a blend of immiscible materials during extrusion, modifies their interfacial properties and stabilises the melt blend; antioxidants or antistatic and processing aids. This can be more of one of the same or different classed of chemicals as listed.

The amount of repellent additive as claimed is 0.03 to 3 weight percentage (wt %) of the weight of the liquid repellent consolidated fibrous layer, preferably between 0.05 and 2 wt% and most preferably between 0.1 and 1 wt %.

The amount of repellent additive in the consolidated fibrous layer can be verified by standard chemical analytic tools such as extraction with benzene or dichloromethane or tetrahydrofurane or toluene or hexafluoroisoporpoanol or DMSO (dimethylsulfoxide) and analysis with standard analytic systems such as Elemental analysis.

A wheel arch liner with the fibrous layer according to the invention, having the repellent additive distributed with the sheath polymer forming the binder throughout the part, would have an overall better distribution of the repellent additive; therefore any possible damage to the surface may not cause a deterioration of the liquid repellence of the part.

Surprisingly the hot moulding of the at least fibrous layer comprising the repellent additive containing bicomponent filaments or cut filaments increases the beneficial effect of the repellent additive. The melting and consolidation of the sheath material during the hot moulding process may distribute the repellent additive molecules to a more preferred location, enhancing the water repellent effects.

Furthermore surprisingly both the uptake of water as well as the speed of drying was improved, rendering in an overall dryer part during use. This is in particular favourable in situations where the car is parked after driving through wet wetter. A wet wheel arch liner not able to dry quickly might be more enhancing any corrosion to the body of the vehicle.

In a preferred embodiment of the invention the core of the bicomponent filaments is made of a thermoplastic polymer, preferably polyester, preferably polyethylene-terephthalate (PET), or polybutylene terephthalate (PBT).

The sheath of the bicomponent filaments is preferably made of a copolymer of polyester, preferably a copolymer of polyethylene-terephthalate (coPET), or a Copolymer of polybutylene terephthalate (coPBT), or polypropylene. The sheath further comprises the repellent additive according to the invention.

During moulding the sheath of the bicomponent filaments melts forming the binder and the core of the bicomponent filaments may stay intact forming the fibrous character of the consolidated fibrous layer. The molten sheath will form droplets binding the filaments together forming a consolidated fibrous layer. The moulding is done under heat, for instance between hot moulding part forming the final shape of the part produced. The moulding tool can heat up the fibrous layer direct, for instance using hot steam or indirect, for instance by heating the moulding tool.

As the wheel arch liner is a curved product that is difficult to stack, and occupies a large volume in comparison to the weight of the part, it is preferred to add one or more fold lines in the part to be able to store the part substantially flat and form it in the arch covering part during the assembly on the car. Advantageously the combination of filaments with the fold line increase the stability of the fold line causing less breakage of the part in the area of the fold line. Preferably the fold line is formed by at least a more compressed area forming the fold, more preferably the fold is formed by 2 compressed areas at either side of the fibrous material layer enabling a better forming of the part as pictured in figure 3. The fold formed by compression on one side preferably is less deep than the fold formed at the opposite site, whereby the fold at the inner side of the arch facing the wheel is deeper compressed than the fold line at the outer side of the arch facing the vehicle body. This difference in depth of the fold line diminishes the stress during forming on the surface of the consolidated fibrous layer, preventing warping or deforming during assembly and rendering is a longer durability of the part.

The amount of the sheath polymer, in weight percentage of the fibrous layer, is preferably between 10 and 60%, preferably up to 35% of the total weight of the fibrous layer, for example 100% bicomponent fibrous layer with up 30% of sheath binder material.

The weight percentage of the sheath of bicomponent filament or cut filament is preferably between 10 and 60%.

The fibrous layer preferably has up to 100% bicomponent filaments or bicomponent cut filaments also known as staple fibers.

In an embodiment, bicomponent staple fibers, having the repellent additive according to the invention in the sheath polymer, may be mixed with other types of staple fibers, for instance thermoplastic staple fibers and or recycled fiber materials. The stable fibers are preferably polyester, preferably polyethylene-terephthalate (PET) or polybutylene terephthalate (PBT), or a mixture of such fibers. It can also be a shoddy material with preferably at least 50% of synthetic fibers, preferably recycled polyester type fibers.

Preferably the fibrous layer is consisting of at least 25 up to 100% of bicomponent cut filaments containing the liquid repellent additive in the sheath polymer and 0 to 75% of staple fibers such as polyester staple fibers, synthetic recycling fibers, or synthetic shoddy material with at least 51% of synthetic fibers. The overall repellent additive in the final consolidated layer should be between 0.03 - 3 weight percentage (wt %) of the weight of the liquid repellent consolidated fibrous layer, preferably between 0.05 and 2 wt % and most preferably between 0.1 and 1 wt %.

In case that part of the bicomponent cut filaments containing the repellent additive is replaced by non-additive containing staple fibers, the percentage of the additive added to the sheath of the bicomponent cut filaments should be increased to compensate.

The use of filaments over cut filaments might be more preferred as filaments enhance the durability, stiffness and the stone chipping performance of the wheel arch liner even further.

The liquid repellent consolidated fibrous layer has an approximate thickness between 1 and 8 mm, preferably between 1 and 5 mm. The thickness might vary over the surface of the wheel arch liner. Variable thickness might be obtained by locally compressing further than the surrounding area.

The liquid repellent consolidated fibrous layer has an area weight preferably between 100 and 1700 g.m⁻², preferably between 300 and 1500 g.m⁻² preferably between 500 and 1300 g.m⁻². Due to locally stretching of the fibrous mat during moulding of the part, the area weight might vary throughout the part. Due to different local compression of the layer also the density of the consolidated fibrous layer might vary.

Local difference in density and or compression and or thickness might cause local variation in the surface tension obtained, preferably the surface tension is lower than 39 mN/m, preferably in the range of 25 to 37 mN/m.

The compressed and consolidated fibrous layer is porous and has an acoustic absorption that is depending on the area weight and thickness. The wheel arch liner preferably has at least a liquid repellent consolidated fibrous layer has an air flow resistance between 100 to 5000 Ns/m³, preferably between 200 to 3000 Ns/m³, preferably between 200 to 3000 Ns/m³, according to current ISO 9053, using the direct airflow method (method A). By incorporating the repellent additive in the sheath polymer instead of using a coating or additional layer to achieve the repellency, the acoustic performance of the layer is not effected by a repellence treatment.

In a further embodiment of the invention the outer wheel arch liner can further comprise at least one additional layer for instance a nonwoven scrim layer, superposed and laminated to the outer surface of at least one of the outer consolidated fibrous layers, to further optimise the properties or as a processing aid preventing the fibrous layer from sticking to the mould during moulding of the part.

In a preferred embodiment of the invention the staple fiber or continuous filament are made by polyester rendering in a mono material product. Such a product would be easy to recycle. For instance the material may be melted again and formed in PET resin to be reused for all types of PET products including the product according to the invention, or directly shredded into pieces that can be used as raw material for the same, similar or other products.

The outer wheel arch liner can be produced according to the standard production methods with at least a moulding step. The material may be heated in advance to the moulding or in the same step as the moulding to obtain the consolidation of the fibrous layer. During the moulding step the fibrous layer is compressed to form the shape of the outer wheel arch liner.

Any range given should include the starting and end point as well as normal expected deviations in the measurements.

### Brief description of drawings

Figure 1 schematic figure of a wheel arch liner.
Figure 2 shows a cross section of the fibrous layer in the length direction of the wheel arch liner.
Figure 3 shows an example of an outer wheel arch liner with a hinge.
Figure 4 shows a schematic picture of a cross section of a bicomponent filament.

### Description of embodiments

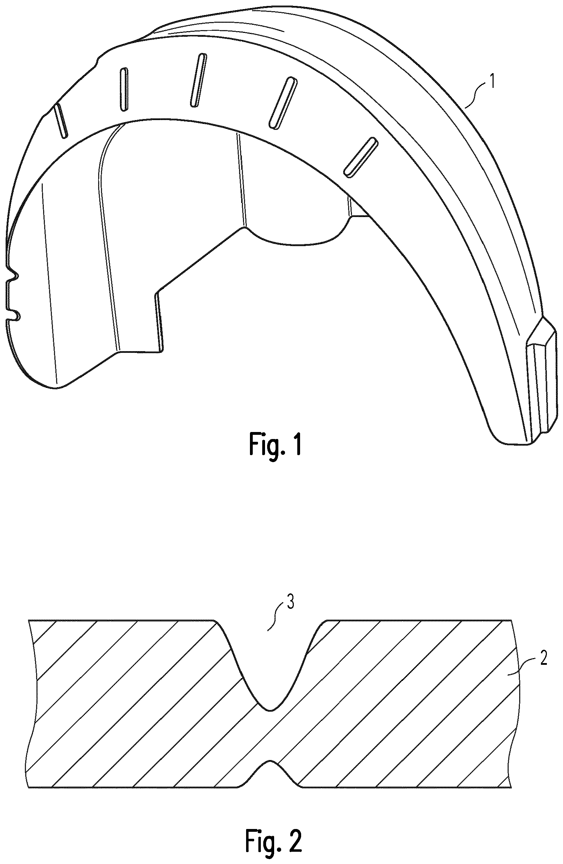

Figure 1 shows a picture of a wheel arch liner

Outer wheel arch liners according to the invention was produced using bicomponent filaments, where the core of the filament was made of polyester and the sheath was made of copolymer of polyester mixed with a repellent fluorinated additive. The ratio of the sheath was 30 wt% and the core was 70 wt%. The area weight was 1000 g.m⁻².

The fibrous layer were compressed and consolidated to a thickness of about 4 mm.

Examples consolidated fibrous layers with an area weight of 1000 g/m2 were made from CoPET/PET sheath-core bicomponent filaments with a copolymer of PET as the sheath and PET as the core. The weight ratio of sheath to core was 30 to 70. The reference sample had no additive added, while example 1 had 0.17% repellent additive according to the invention added, and example 2 had 0.25% of repellent additive according to the invention added (as weight percentage of the final consolidated fibrous layer).

The surface energy, also known as surface tension, was measured using the ink test of Arcotest®. In principle a volume of ink with a predefined surface tension is placed on the surface. For the analyses the method description of the test was followed. For the test the test inks were used.

Following results were found:

The reference sample without the repellent additive has a surface energy of 46 mN/m for the 4mm sample.

Reference 1 with 0.17 wt% repellent additive has a surface energy of 38-39 mN/m for the 4 mm sample.

Reference 2 with 0.25 wt% repellent additive has a surface energy of 35 mN/m for the 4 mm sample.

The examples show a clear decrease of the surface energy with the repellent additive according to the invention and in addition show that with increased concentration of the repellent additive a further decrease can be obtained although not in the same extension as the increased concentration used.

An outer wheel arch liner for a vehicle according to the invention, whereby the wheel arch liner has at least one hinge in the form of at least one folding line. The hinge or folding line can be made during moulding of the outer wheel arch liner, by compressing the fibrous layer more along a line creating a folding line. The folding line is formed over the width of the arch so that the part can be folded open as is depicted in figure 3. More than 1 fold line over the width of the arch might be advantageous. Whereby preferably each of those folding lines is formed by 2 ridges (figure 2, (3)) formed by further compressing locally the fibrous layer (2), preferably the ridges are placed at the same fold line with the deepest area of the ridge opposite of each other. Preferably the ridge on one site is deeper than on the other side.

## Claims

1. Wheel arch liner for a vehicle, comprising at least a fibrous layer comprising of thermoplastic bicomponent filaments, consisting of a first polymer forming the core of the bicomponent filament and a second polymer forming the sheath of the bicomponent filament, **characterized in that** the sheath of the bicomponent filament comprises at least one repellent additive of fluorinated or per-fluorinated short chain molecules with a chain length in the range of C4-C14 and whereby the fibrous layer is consolidated by heating thereby melting the sheath polymer forming binding points between the filaments and redistributing the repellent additive forming a liquid repellent consolidated fibrous layer.

2. Wheel arch liner according to claim 1, whereby the amount of the repellent additive is 0.03 to 3 weight percentage (wt%) of the liquid repellent consolidated fibrous layer.

3. Wheel arch liner according to any of the preceding claims, whereby the core polymer is polyester, preferably polyethylene-terephthalate (PET), or polybutylene terephthalate (PBT).

4. Wheel arch liner according to any of the preceding claims, whereby the sheath polymer is a copolymer of polyester, preferably a copolymer of polyethylene-terephthalate (coPET), or a Copolymer of polybutylene terephthalate (coPBT), or polypropylene.

5. Wheel arch liner according to any of the preceding claims, whereby the amount of the sheath polymer, in weight percentage of the liquid repellent consolidated fibrous layer, is preferably between 10 and 60%.

6. Wheel arch liner according to any of the preceding claims, whereby the liquid repellent consolidated fibrous layer has an approximate thickness between 1 and 8 mm, preferably between 1 and 5 mm.

7. Wheel arch liner according to any of the preceding claims, whereby the liquid repellent consolidated fibrous layer has an area weight between 100 and 1700 g.m⁻², preferably between 300 and 1500 g.m⁻², preferably between 500 and 1300 g.m-2

8. Wheel arch liner according to any of the preceding claims, whereby the liquid repellent consolidated fibrous layer has an airflow resistance between 100 to 5000 Ns/m³, preferably between 200 to 3000 Ns/m³.

9. Wheel arch liner according to any of the preceding claims, whereby the wheel arch liner has at least one hinge in the form of at least one folding line.

10. Wheel arch liner according to any of the preceding claims whereby the fibrous layer consists of bicomponent filaments.

11. Wheel arch liner according to any of the preceding claims whereby the bicomponent filaments are cut bicomponent filaments.

12. Wheel arch liner according to claim 11 whereby the fibrous layer further comprises thermoplastic staple fibers, preferably polyester staple fibers such as polyethylene terephthalate (PET), or recycled staple fibers or shoddy fibers.

13. Wheel arch liner according to claim 11 or 12, whereby the cut bicomponent filaments comprise at least between 30% by weight, preferably at least 50% by weight, preferably 100% by weight.

## Patentansprüche

1. Radlaufschale für ein Fahrzeug, umfassend mindestens eine Faserschicht, umfassend thermoplastische Bikomponentenfilamente, bestehend aus einem ersten Polymer, das den Kern des Bikomponentenfilaments bildet, und einem zweiten Polymer, das die Hülle des Bikomponentenfilaments bildet, **dadurch gekennzeichnet, dass** die Hülle des Bikomponentenfilaments mindestens einen abweisenden Zusatzstoff aus fluorierten oder perfluorierten kurzkettigen Molekülen mit einer Kettenlänge im Bereich von C4-C14 umfasst, und wobei die Faserschicht durch Erwärmen verfestigt wird, wodurch das Hüllenpolymer geschmolzen wird, das Bindepunkte zwischen den Filamenten bildet, und der abweisende Zusatzstoff, der eine flüssigkeitsabweisende verdichtete Faserschicht bildet, neu verteilt wird.

2. Radlaufschale nach Anspruch 1, wobei die Menge des abweisenden Zusatzstoffs 0,03 bis 3 Gewichtsprozent (Gew.-%) der flüssigkeitsabweisenden verfestigten Faserschicht ist.

3. Radlaufschale nach einem der vorstehenden Ansprüche, wobei das Kernpolymer Polyester, vorzugsweise Polyethylenterephthalat (PET) oder Polybutylenterephthalat (PBT) ist.

4. Radlaufschale nach einem der vorstehenden Ansprüche, wobei das Hüllenpolymer ein Copolymer aus Polyester, vorzugsweise ein Copolymer aus Polyethylenterephthalat (coPET), oder ein Copolymer aus Polybutylenterephthalat (coPBT) oder Polypropylen ist.

5. Radlaufschale nach einem der vorstehenden Ansprüche, wobei die Menge des Hüllenpolymers, in Gewichtsprozent der flüssigkeitsabweisenden verdichteten Faserschicht, vorzugsweise zwischen 10 und 60% ist.

6. Radlaufschale nach einem der vorstehenden Ansprüche, wobei die flüssigkeitsabweisende verdichtete Faserschicht eine ungefähre Dicke zwischen 1 und 8 mm, vorzugsweise zwischen 1 und 5 mm, aufweist.

7. Radlaufschale nach einem der vorstehenden Ansprüche, wobei die flüssigkeitsabweisende verfestigte Faserschicht ein Flächengewicht zwischen 100 und 1700 g.m⁻², vorzugsweise zwischen 300 und 1500 g.m⁻², vorzugsweise zwischen 500 und 1300 g.m⁻².

8. Radlaufschale nach einem der vorstehenden Ansprüche, wobei die flüssigkeitsabweisende verfestigte Faserschicht einen Luftstromwiderstand zwischen 100 bis 5000 Ns/m³, vorzugsweise zwischen 200 bis 3000 Ns/m³, aufweist.

9. Radlaufschale nach einem der vorstehenden Ansprüche, wobei die Radlaufschale mindestens ein Scharnier in Form von mindestens einer Klapplinie aufweist.

10. Radlaufschale nach einem der vorstehenden Ansprüche, wobei die Faserschicht aus Bikomponentenfilamenten besteht.

11. Radlaufschale nach einem der vorstehenden Ansprüche, wobei die Bikomponentenfilamente geschnittene Bikomponentenfilamente sind.

12. Radlaufschale nach Anspruch 11, wobei die Faserschicht weiter thermoplastische Stapelfasern, vorzugsweise Polyesterstapelfasern wie Polyethylenterephthalat (PET), oder recycelte Stapelfasern oder Reißwollefasern umfasst.

13. Radlaufschale nach Anspruch 11 oder 12, wobei die geschnittenen Bikomponentenfilamente mindestens zwischen 30 Gew.-%, vorzugsweise mindestens 50 Gew.-%, vorzugsweise 100 Gew.-% umfassen.

## Revendications

1. Doublure de passage de roues pour véhicule, comprenant au moins une couche fibreuse constituée de filaments thermoplastiques à deux composants, constitués d'un premier polymère formant l'âme du filament à deux composants et d'un second polymère formant la gaine du filament à deux composants, **caractérisée en ce que** la gaine du filament à deux composants comprend au moins un additif répulsif de molécules à chaîne courte fluorées ou perfluorées ayant une longueur de chaîne comprise dans la plage C4-C14 et dans laquelle la couche fibreuse est consolidée par chauffage en faisant ainsi fondre le polymère de gaine formant des points de liaison entre les filaments et redistribuant l'additif répulsif en formant une couche fibreuse consolidée répulsive vis-à-vis des liquides.

2. Doublure de passage de roues selon la revendication 1, dans laquelle la quantité de l'additif répulsif représente 0,03 à 3 pour cent en poids (% en poids) de la couche fibreuse consolidée répulsive vis-à-vis des liquides.

3. Doublure de passage de roues selon l'une quelconque des revendications précédentes, dans laquelle le polymère d'âme est un polyester, de préférence un polyéthylène-téréphtalate (PET), ou un polybutylène téréphtalate (PBT).

4. Doublure de passage de roues selon l'une quelconque des revendications précédentes, dans laquelle le polymère de gaine est un copolymère de polyester, de préférence un copolymère de polyéthylène-téréphtalate (coPET), ou un copolymère de polybutylène téréphtalate (coPBT), ou un polypropylène.

5. Doublure de passage de roues selon l'une quelconque des revendications précédentes, dans laquelle la quantité de polymère de gaine, en pourcentage en poids de la couche fibreuse consolidée répulsive vis-à-vis des liquides, est de préférence comprise entre 10 et 60 %.

6. Doublure de passage de roues selon l'une quelconque des revendications précédentes, dans laquelle la couche fibreuse consolidée répulsive vis-à-vis des liquides à une épaisseur approximative comprise entre 1 et 8 mm, de préférence entre 1 et 5 mm.

7. Doublure de passage de roues selon l'une quelconque des revendications précédentes, dans laquelle la couche fibreuse consolidée répulsive vis-à-vis des liquides a un poids superficiel compris entre 100 et 1 700 g.m⁻², de préférence entre 300 et 1 500 g.m⁻², de préférence entre 500 et 1 300 g.m⁻².

8. Doublure de passage de roues selon l'une quelconque des revendications précédentes, dans laquelle la couche fibreuse consolidée répulsive vis-à-vis des liquides présente une résistance à un écoulement d'air comprise entre 100 à 5 000 Ns/m³, de préférence entre 200 à 3 000 Ns/m³.

9. Doublure de passage de roues selon l'une quelconque des revendications précédentes, dans laquelle la garniture de passage de roues comporte au moins une charnière sous la forme d'au moins une ligne de pliage.

10. Doublure de passage de roues selon l'une quelconque des revendications précédentes, dans laquelle la couche fibreuse est constituée de filaments à deux composants.

11. Doublure de passage de roues selon l'une quelconque des revendications précédentes, dans laquelle les filaments à deux composants sont des filaments à deux composants coupés.

12. Doublure de passage de roues selon la revendication 11, dans laquelle la couche fibreuse comprend en outre des fibres discontinues thermoplastiques, de préférence des fibres discontinues de polyester telles que du polyéthylène téréphtalate (PET), ou des fibres discontinues recyclées ou des fibres effilochées.

13. Doublure de passage de roues selon la revendication 11 ou 12, dans laquelle les filaments à deux composants coupés constituent au moins entre 30 % en poids, de préférence au moins 50 % en poids, de préférence 100 % en poids.
